# EUROPEAN PATENT SPECIFICATION

(11) **EP 2 590 838 B1**
(45) Date of publication and mention of the grant of the patent: **14.08.2019**
(21) Application number: 11743368.0
(22) Date of filing: 06.07.2011
(51) Int. Cl.: B60P 1/28

(54) **TIPPING BODY FOR VEHICLES IN GENERAL WITH SAFETY MEANS**
KIPPKÖRPER FÜR FAHRZEUGE IM ALLGEMEINEN MIT EINER SICHERHEITSVORRICHTUNG
CORPS BASCULANT POUR VÉHICULES EN GÉNÉRAL COMPORTANT DES MOYENS DE SÉCURITÉ

(30) Priority: 07.07.2010 IT MI20101251
(43) Date of publication of application: 15.05.2013
(73) Proprietor: Bonetti S.r.l., 20060 Vignate (IT)
(72) Inventor: BONETTI, Alberto, I-20065 Inzago (IT); BONETTI, Enrico, I-20060 Vignate (IT); BONETTI, Maurizio, I-20060 Vignate (IT)
(74) Representative: Modiano, Micaela Nadia
(86) International application number: PCT/IB2011/052991
(87) International publication number: WO 2012/004751

(56) References cited:
- DE-A1- 2 128 645
- DE-B- 1 152 314
- FR-A- 1 279 862
- FR-A1- 2 858 274

## Description

### Technical field

The present invention relates to a tipping body for vehicles in general with safety means.

### Background art

As is known, a problem currently encountered with tipping bodies is the one related to safety, in order to prevent the body from accidentally tipping due to a load that is not perfectly balanced and/or fixed or due to issues of construction geometry and/or simply due to insufficient weight.

With the solutions of the background art, motor vehicles provided with a tipping body are in fact generally used in a multifunctional manner to transport loose material, such as sand, grass, inert materials and the like, which require the body to tip, and to transport material that cannot be tipped, including mobile equipment loaded by means of adapted ramps.

During the ascent or descent of materials and means performed by way of ramps or the like, the body can rise unexpectedly from its normal inactive position, creating a severe danger situation.

The same dynamics can be observed during normal starting of the motor vehicle from a standstill with a load having an elevated and rearward center of gravity, such as for example the transport of boards for the building field and an insufficient fixing of the goods to the chassis of the motor vehicle, and therefore a self-tipping of the body occurs, particularly with a sudden start from a standstill, or on an uphill road.

Obviously, all these uncontrolled body tipping situations are the source of very severe dangers both for the operator and for nearby people, with consequences that in some cases can be disastrous.

In order to try to obviate these problems, especially in bodies with three-side tipping, bolts are used which can lock the rotation of the body by way of the manual insertion of a bolt.

This solution is certainly valid from a theoretical viewpoint but in practice has proved to be scarcely satisfactory, because the operator frequently forgets to insert the bolt, or another source of danger possibly arises from the fact that the operator performs inadvertently the tipping operations with the bolt in the locking position, thus possibly causing damage to the motor vehicle and to the means intended for tipping.

FR 2858274 discloses a tipping body as defined in the preamble of claim 1.

### Disclosure of the Invention

The aim of the invention is to solve the problems cited above, by providing a tipping body for vehicles in general, with safety means, which allows to always have a situation of safe locking of the body in the lowered position, without entailing risks due to forgetfulness in actuation or due to incorrect actuation.

Within this aim, an object of the invention is to provide a tipping body in which it is possible to perform traditional tipping operations yet act always in conditions of maximum safety.

Another object of the present invention is to provide a tipping body that thanks to its particular constructive features is capable of giving the greatest assurances of reliability and safety in use.

Another object of the present invention is to provide a tipping body that can be obtained easily starting from elements and materials commonly available on the market and is further competitive from a merely economic standpoint.

This aim and these and other objects that will become better apparent hereinafter are achieved by a tipping body for vehicles in general with safety means, as defined in claims 1 and 5.

### Brief description of the drawings

Further characteristics and advantages will become better apparent from the description of a preferred but not exclusive embodiment of a tipping body for vehicles in general with safety means, illustrated by way of non-limiting example in the accompanying drawings, wherein:

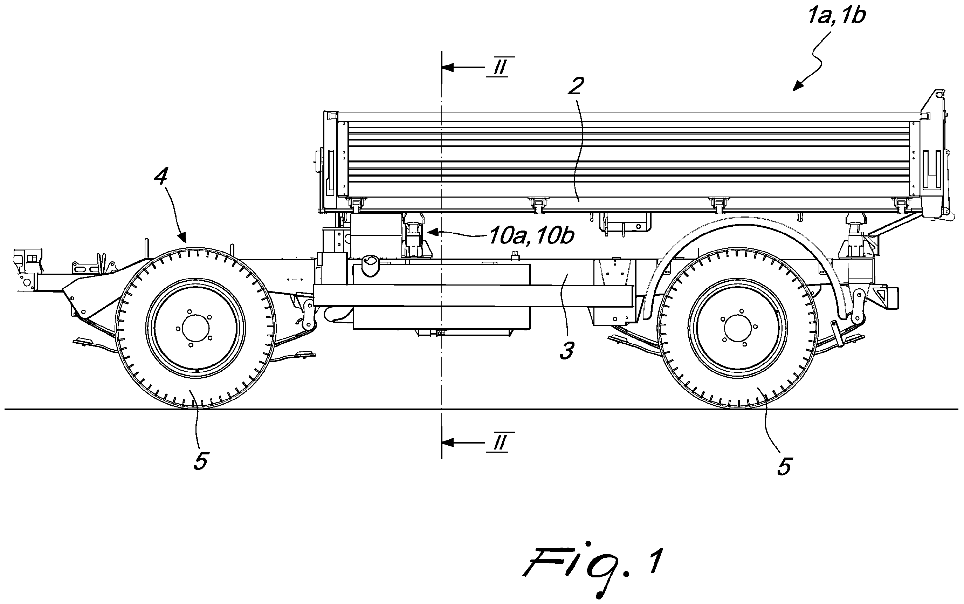

Figure 1 is a schematic side elevation view of the chassis of a vehicle with tipping body according to the invention;
Figure 2 is a sectional view of the body shown in Figure 1, taken along the line II-II of Figure 1;
Figure 3 is an enlarged-scale view of a detail of the removable locking means with the corresponding circuit for actuating the body shown in Figure 2;
Figure 4 is an enlarged-scale view of a detail of the removable locking means shown in Figure 2 during the step for uncoupling said removable locking means to tip the body;
Figure 5 is an enlarged-scale view of a detail of the removable locking means shown in Figure 2 during the final step of the lowering of the body;
Figure 6 is an enlarged-scale view of a detail of the removable locking means shown in Figure 2 during the step of automatic coupling of the removable locking means at the end of the lowering of the body;
Figure 7 is a sectional view of a variation of the body shown in Figure 1, taken along the line II-II of Figure 1;
Figure 8 is an enlarged-scale view of a detail of the removable locking means with the corresponding circuit for actuating the body shown in Figure 7;
Figures 9 and 10 are two enlarged-scale views of details of the removable locking means shown in Figure 7 during the step for uncoupling said removable locking means to tip the body;
Figures 11 and 12 are two enlarged-scale views of details of the removable locking means shown in Figure 2 during the final step of the lowering of the body;
Figure 13 is an enlarged-scale view of a detail of the removable locking means shown in Figure 7 during the step of automatic coupling of the removable locking means at the end of the lowering of the body;
Figures 14 to 16 are views of three possible actuation circuits of the body shown in the preceding figures.

### Ways of carrying out the invention

With reference to the figures, the tipping body for vehicles in general with safety means, generally designated by the reference numerals 1a and 1b in its two embodiments, comprises a tipping bed 2, which in a per se known manner is associated with the chassis 3 of a vehicle 4, which can be shaped in any way and is referenced only by the wheels 5 in the drawings.

The bed 2 is connected to the chassis 3 by way of pivoting means, which are of a per se known type, and therefore are not described in detail, and allow to tip the bed with respect to the chassis.

The peculiarity of the invention resides in that in a point that is spaced from the pivoting means of the bed 2 means for removable locking of the tipping are provided, which are generally designated by the reference numerals 10a and 10b in the two proposed embodiments.

Advantageously, the means 10a and 10b for removable locking of the tipping have the peculiarity that they engage automatically when the bed 2 is lowered onto the chassis 3 and are disengaged before the lifting piston is actuated.

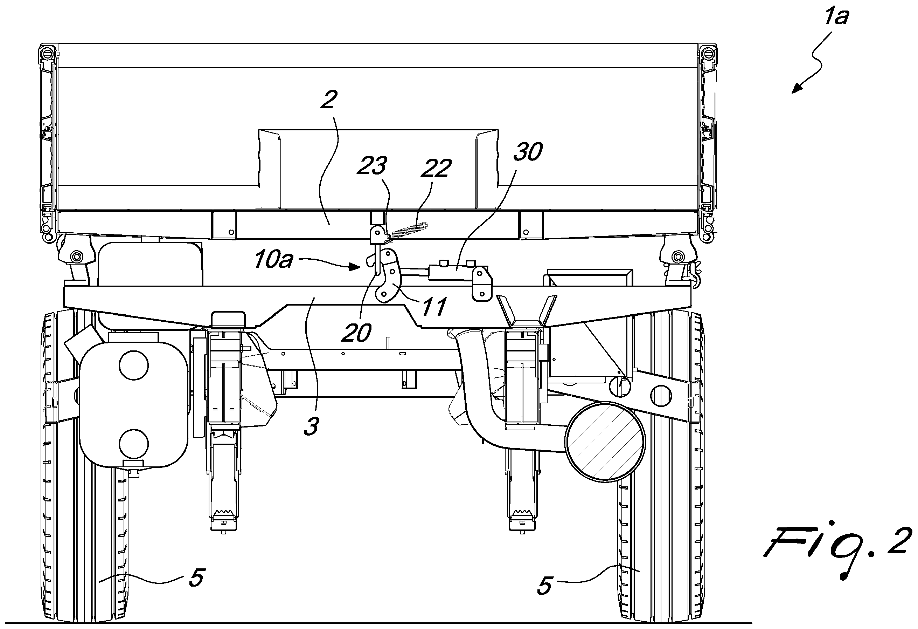

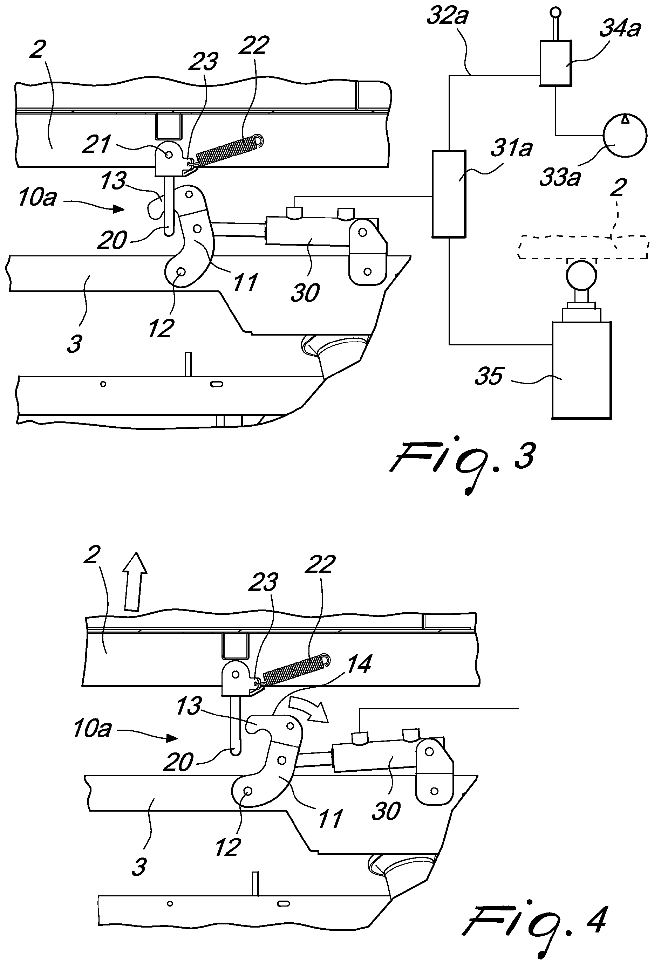

In greater detail, with particular reference to Figures 2 to 6, the removable locking means 10a comprise a locking hook 11, which is hinged at 12 to the chassis 3 and has an upper hook-like portion with an outside curve 14 which, in the locking position, is inclined downwardly.

A coupling ring 20 is provided correspondingly on the bed 2 and is pivoted at 21 to the bed 2 and retained in a stable position by means of a return spring 22, which acts between the bed 2 and a protrusion 23 which is connected to the base of the coupling ring 20.

The hook 11 is connected to a release cylinder 30, which is controlled by a sequential valve 31a, which is arranged on a circuit 32a that has a hydraulic pump 33a for introducing a pressurized fluid whose circulation is controlled by a control system 34a for operating the lifting, which is located on the duct 32a upstream with respect to the sequential valve 31a downstream of which the single-action lifting piston of the bed 2, generally designated by the reference numeral 35, is arranged.

With the described arrangement, when the control system 34a is actuated, the release cylinder 30 is actuated preliminarily and disengages the hook 11 from the coupling ring 20, and then the lifting piston 35 is actuated and can act on the bed 2 for its tipping in extreme safety, with the assurance of uncoupling with possibility of free rotation.

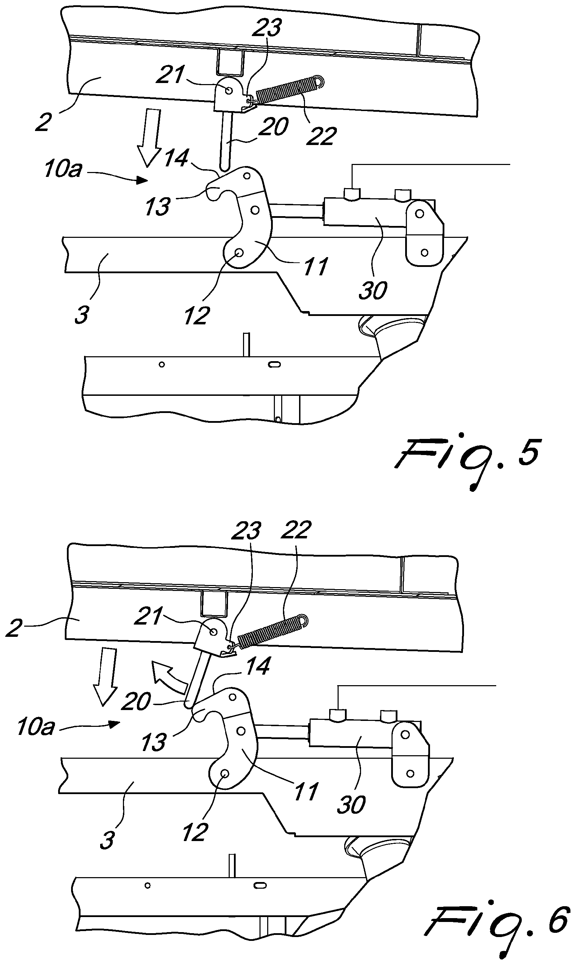

During the lowering of the bed 2, as shown in Figures 5 and 6, the hook 11 has returned to its inactive position, by way of the spring of the cylinder 30, and the ring 20, during the lowering of the bed 2, engages with its inclined outside curve, oscillating in contrast with the return action applied by the return spring 22, so that the coupling ring 20 can move beyond the hook 11 and then couple automatically with it by way of the elastic return applied by the return spring 22, thus achieving the automatic locking of the body when it is lowered onto the chassis 3 of the vehicle.

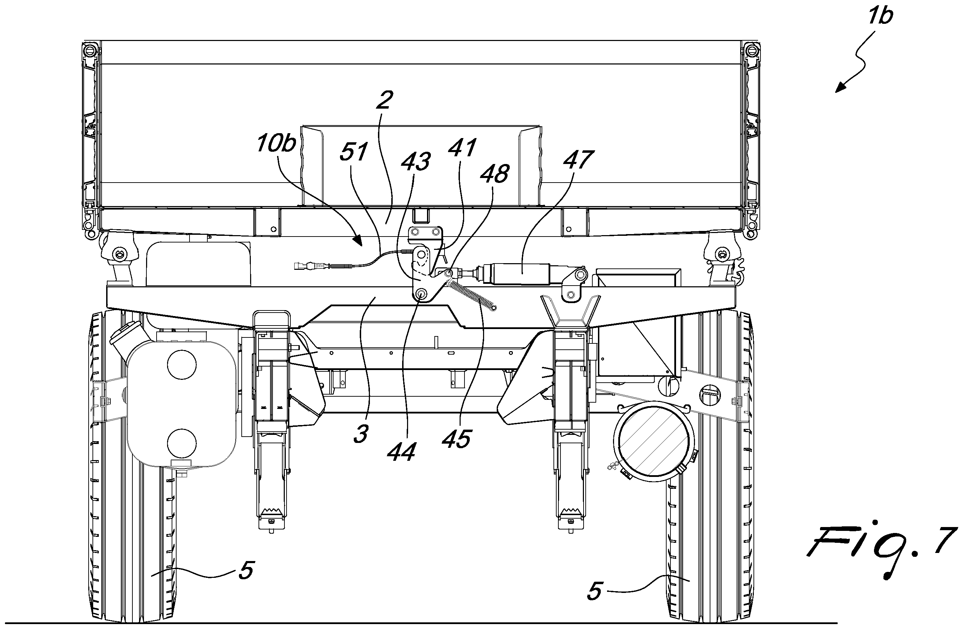

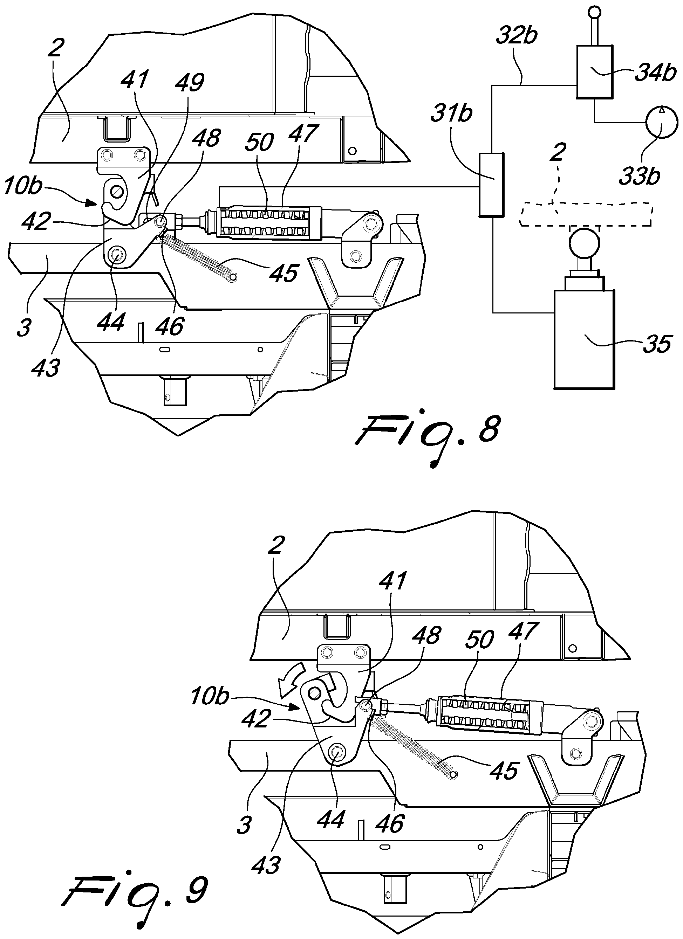

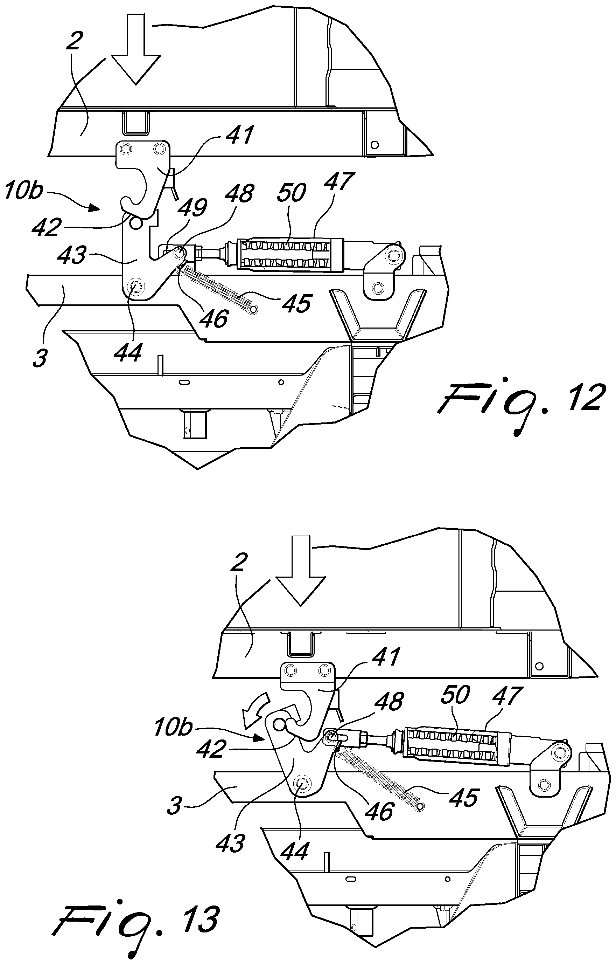

As regards the embodiment shown in Figures 7 to 13, the removable locking means 10b comprise a locking hook 41, which is integral with the bed 2 and has a hook-shaped upper portion with an outer curve 42 which is inclined downwardly.

A coupling element 43 is provided correspondingly on the chassis 3 and is pivoted at 44 to the chassis 3 and retained in a stable position by means of a return spring 45, which acts between the bed 2 and a protrusion 46 that is connected to the base of the coupling element 43.

The coupling element 43 is associated with a release cylinder 47, controlled by a sequential valve 31b, which is arranged on a circuit 32b which has a hydraulic pump 33b for introducing a pressurized fluid whose circulation is controlled by a control system 34b to actuate lifting, which is arranged on the duct 32b upstream with respect to the sequential valve 31b downstream of which the single-acting lifting piston 35 of the bed 2 is arranged.

More precisely, the coupling element 43 is associated with the release cylinder 47 by means of a slider 48, which is integral with the coupling element 43 and can move in a guide 49 defined in the head of the piston of the release cylinder 47.

With the described arrangement, when the control system 34b is actuated, the release cylinder 47 is actuated preliminarily and disengages the coupling element 43 from the locking hook 41, and then the lifting piston 35 is actuated and can act on the bed 2 to tip it in extreme safety with the assurance of uncoupling with possibility of free rotation.

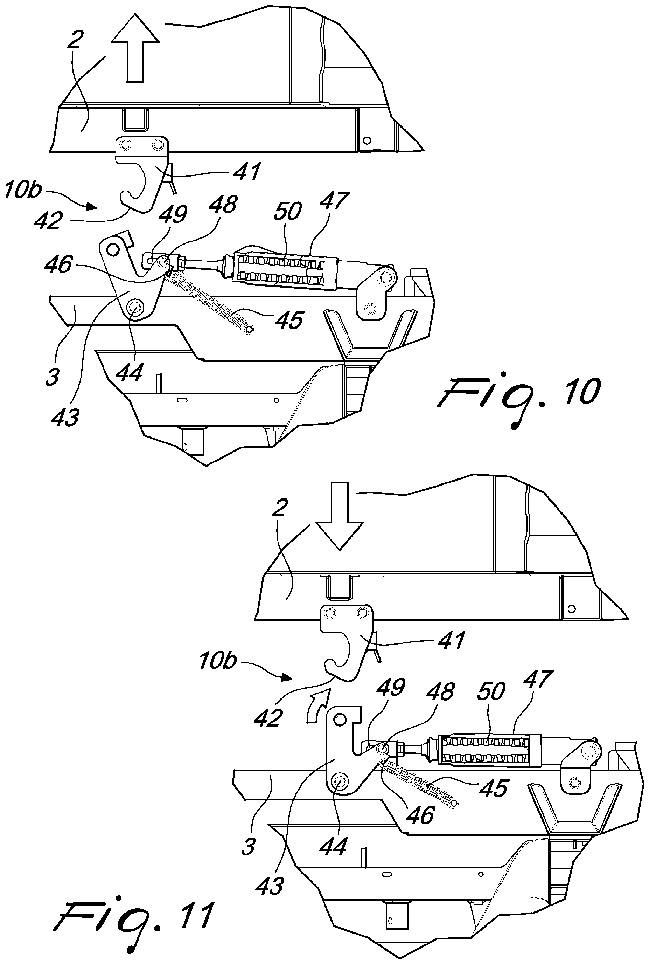

During the lowering of the bed 2, as highlighted in Figures 11 to 13, the coupling element 43 has return to its inactive position, by means of the spring 50 of the release cylinder 47, and the locking hook 41, during the lowering of the bed 2, engages with its inclined outside curve, causing the oscillation, in contrast with the return action applied by the return spring 45, of said coupling element 43, which can move beyond the locking hook 41 and thus couple automatically with it by way of the elastic return applied by the return spring 45, thus achieving the automatic locking of the body when it is lowered onto the chassis 3 of the vehicle.

From what has been described above it can thus be seen that the invention achieves the intended aim and objects, and in particular the fact is stressed that the solutions used ensure that, even with bodies having a relatively low weight, a force is always applied which is sufficient for the insertion of the locking means, since the locking coupling is provided by the oscillation of the coupling ring in contrast with the return spring, so that the ring can initially move beyond the hook and be subsequently returned to the locking position.

Moreover, the circuit used gives assurance that upon tipping the release of the hook from the ring is achieved automatically and preliminarily, followed by tipping by means of the single-acting cylinder.

It should be added to the above that a position sensor 51 is provided, which is adapted to detect the position of the coupling element 43 and which, when the coupling element 43 moves away from the locking hook 41, automatically engages an intermittent buzzer and activates a warning light that indicates that the body is being lifted.

During the lowering of the body, when the coupling element 43 and the locking hook 41 couple again, the position sensor 51 deactivates the buzzer and the warning lights, indicating that the body is in the lowered position and in locked conditions.

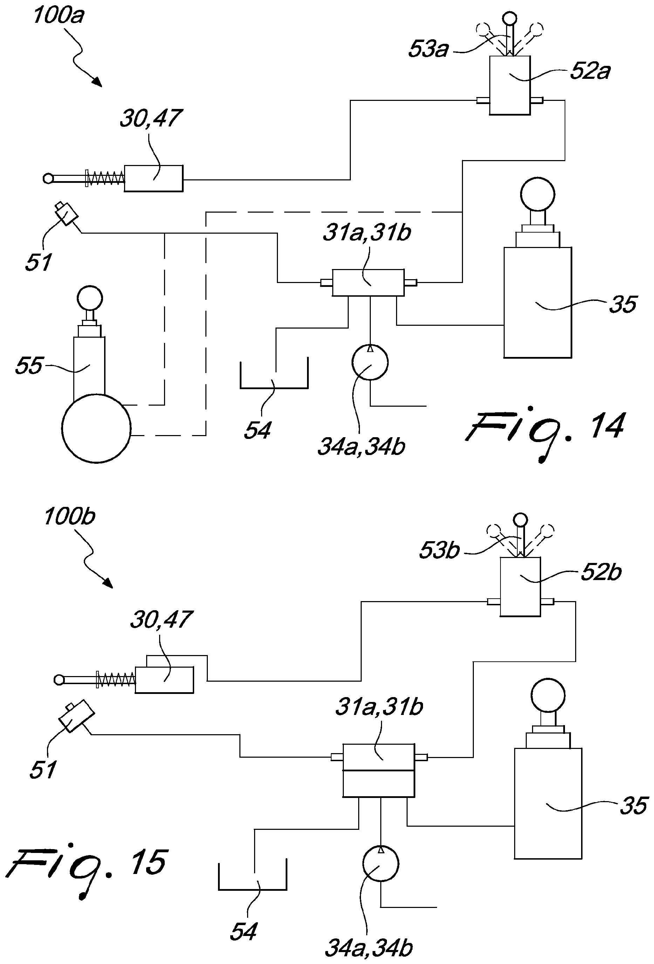

Three circuits for actuating the tipping bodies 1a and 1b are disclosed with reference to Figures 14 to 16.

The first actuation circuit, generally designated by the reference numeral 100a in Figure 14, is composed of an electrical system and a hydraulic system, which comprise, respectively, an electromagnet, which defines the release cylinder 30 or 47 and is connected directly to an electric switch 52a, which can be switched by an operator into the lifting position and into the descent position of the body by means of a control lever 53a, so as to move the removable locking means 10a or 10b.

Once the removable locking means 10a or 10b have been moved, they press on the position sensor 51, which provides sequentiality, which in this case is of the electrical type, which actuates the valve 31a or 31b, provided in this actuation circuit 100a by an electric valve connected directly to an oil tank 54 and to the lifting piston 35, which is of the hydraulic type.

As an alternative, the lifting piston 35 can be replaced with an electric tipping piston 55 which is connected directly to the electric switch 52a.

The second actuation circuit, generally designated by the reference numeral 100b in Figure 15, is composed of a pneumatic system and a hydraulic system, which comprise respectively the release cylinder 30 or 47, provided by a pneumatic piston and connected directly to an air control distribution unit 52b, which can be switched by an operator to the lifting position and to the descent position of the body by means of a control lever 53b, so as to move the removable locking means 10a or 10b.

Once the removable locking means 10a or 10b have been moved, they press on the position sensor 51, which provides sequentiality and in this case is provided by a valve that actuates the valve 31a or 31b, which is provided in this actuation circuit 100b by a hydraulic-pneumatic valve which is connected directly to an oil tank 54 and to the lifting piston 35, which is of the hydraulic type.

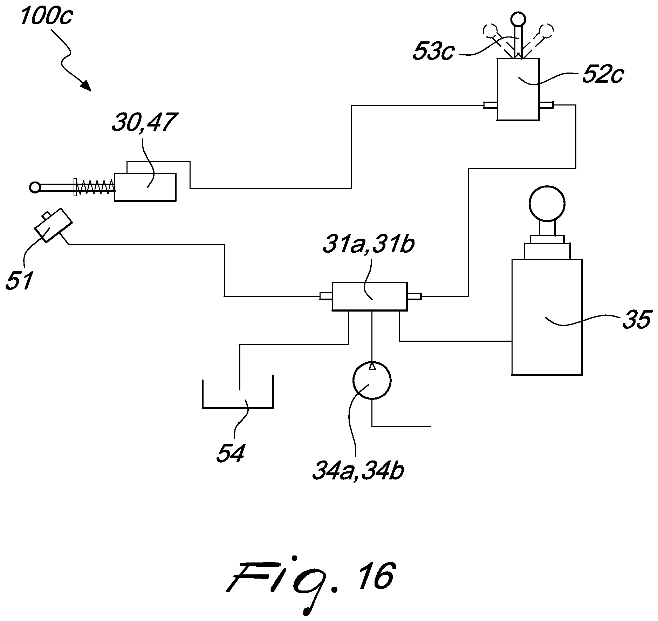

The third actuation circuit, generally designated by the reference numeral 100c in Figure 16, is composed of a hydraulic system which comprises the release cylinder 30 or 47 provided by a hydraulic piston and is connected directly to a hydraulic control distribution unit 52c, which can be switched by an operator into the lifting position and into the lowering position of the body by means of an actuation lever 53c, so as to move the removable locking means 10a or 10b.

Once the removable locking 10a or 10b have been moved, they press on the position sensor 51, which provides sequentiality, which in this case is provided by a valve which actuates the valve 31a or 31b, which is provided, in this actuation circuit 100c, by a hydraulic valve which is connected directly to an oil tank 54 and to the lifting piston 35, which is of the hydraulic type.

This allows the automatic disengagement of the removable locking means 10a and 10b before the body rises and allows the automatic reset, in a sequential manner, of said removable locking means 10a or 10b, maintaining their functionalities independently of the weight of the body.

The invention thus conceived is susceptible of numerous modifications and variations, all of which are within the scope of the appended claims.

Thus, for example, the same solution idea regarding automatic release and reengagement can be used for locking and releasing vehicle-mountable equipment.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A tipping body (1a, 1b) for vehicles in general with safety means, comprising a tipping bed (2) which is associated with a chassis (3) of a vehicle by way of pivoting means for the tipping of said bed, comprising, in a point that is spaced from said pivoting means, means (10a, 10b) for the removable locking of said tipping, which can be inserted automatically when said bed (2) is lowered onto said chassis (3), said means (10a) for removable locking of the tipping comprising a locking hook (11) which is associated with the chassis (3) of the vehicle and can engage a coupling ring (20) which is connected to said bed (2), **characterized in that** it comprises a release cylinder (30) which is connected to said hook (11) for its oscillation with respect to said coupling ring (20), which is actuated by a hydraulic circuit (32a) which is fed by a hydraulic pump (33a) and is provided with a sequential valve (31a) for the actuation of said locking hook (11) ahead of the actuation of the lifting piston (35) of said bed (2).

2. The tipping body (1a) according to claim 1, **characterized in that** said coupling ring (20) is pivoted to said bed (2) for its oscillation in contrast with a return spring (22), which is adapted to keep it engaged with said hook (11).

3. The tipping body (1a) according to one or more of the preceding claims, **characterized in that** said locking hook (11) has, on the outside curve (14), a portion that is inclined downwardly.

4. The tipping body (1a) according to one or more of the preceding claims, **characterized in that** it comprises, between said locking hook (11) and said coupling ring (20), an electrical position sensor which drives a signaling element.

5. A tipping body (1a, 1b) for vehicles in general with safety means, comprising a tipping bed (2) which is associated with a chassis (3) of a vehicle by way of pivoting means for the tipping of said bed, and further comprising, in a point that is spaced from said pivoting means, means (10a, 10b) for the removable locking of said tipping, which can be inserted automatically when said bed (2) is lowered onto said chassis (3), said means (10b) for the removable locking of tipping comprising a locking hook (41), which is integral with said bed (2) and has, on the outer curve (42), a portion that is inclined downwardly, **characterized in that** it comprises release cylinder (47) which is connected to a coupling element (43) which is pivoted to said chassis (3) for its oscillation with respect to said locking hook (41), which is actuated by a hydraulic circuit (32b) which is fed by a hydraulic pump (33b) and is provided with a sequential valve (31b) for the actuation of said coupling element (43) ahead of the actuation of the lifting piston (35) of said bed (2).

6. The tipping body (1b) according to claim 5, **characterized in that** said coupling element (43) is pivoted to said chassis (3) for its oscillation in contrast with a return spring (45), which is adapted to keep it engaged with said locking hook (41).

7. The tipping body (1b) according to claim 5, **characterized in that** it comprises, between said locking hook (41) and said coupling element (43), a position sensor that drives a signaling element.

8. The tipping body (1b) according to claim 5, **characterized in that** it comprises, between said coupling element (43) and said release cylinder (47), a slider (48) which is integral with said coupling element (43) and can move in a guide (49) which is formed in the head of the piston of said release cylinder (47).

## Patentansprüche

1. Ein Kippkörper (1a, 1b) für Fahrzeuge im Allgemeinen mit einer Sicherheitsvorrichtung, der ein Kippbett (2) umfasst, das über Schwenkmittel zum Kippen des Bettes mit einem Fahrgestell (3) verbunden ist; an einem Punkt, der von den Schwenkmitteln beabstandet ist, Mittel (10a, 10b) zur lösbaren Blockierung des Kippens umfassend, die automatisch eingeführt werden können, wenn das Bett (2) auf das Fahrgestell (3) abgesenkt wird; wobei die Mittel (10a) zur lösbaren Blockierung des Kippens einen Blockierhaken (11) umfassen, der mit dem Fahrgestell (3) verbunden ist und in einen Kopplungsring (20) eingreifen kann, welcher mit dem Bett (2) verbunden ist; **dadurch gekennzeichnet, dass** er einen Freisetzungszylinder (30) umfasst, der mit dem Haken (11) verbunden ist, zum Zwecke seiner Oszillation mit Bezug auf den Kopplungsring (20), welche ausgelöst wird durch einen Hydraulikkreis (32a), der von einer Hydraulikpumpe (33a) versorgt wird und mit einem Folgeventil (31a) zur Betätigung des Blockierhakens (11) vor der Betätigung des Hubkolbens (35) des Bettes (2) ausgestattet ist.

2. Der Kippkörper (1a) gemäß Anspruch 1, **dadurch gekennzeichnet, dass** der Kopplungsring (20) drehgelenkig mit dem Bett (2) verbunden ist, zum Zwecke seiner Oszillation im Kontrast zu einer Rückstellfeder (22), die ausgebildet ist, um ihn im Eingriff mit dem Haken (11) zu halten.

3. Der Kippkörper (1a) gemäß einem oder mehreren der obigen Ansprüche, **dadurch gekennzeichnet, dass** der Blockierhaken (11) an seiner Außenkrümmung (14) einen Abschnitt hat, der nach unten geneigt ist.

4. Der Kippkörper (1a) gemäß einem oder mehreren der obigen Ansprüche, **dadurch gekennzeichnet, dass** er zwischen dem Blockierhaken (11) und dem Kopplungsring (20) einen elektrischen Positionssensor umfasst, der ein Signalelement antreibt.

5. Ein Kippkörper (1a, 1b) für Fahrzeuge im Allgemeinen mit einer Sicherheitsvorrichtung, der ein Kippbett (2) umfasst, das über Schwenkmittel zum Kippen des Bettes mit einem Gestell (3) eines Fahrzeugs verbunden ist; und der weiter an einem Punkt, der von den Schwenkmitteln beabstandet ist, Mittel (10a, 10b) zur lösbaren Blockierung des Kippens umfasst, die automatisch eingeführt werden können, wenn das Bett (2) auf das Fahrgestell (3) abgesenkt wird; wobei die Mittel (10b) zur lösbaren Blockierung des Kippens einen Blockierhaken (41) umfassen, der integral mit dem Bett (2) ist und an der äußeren Krümmung (42) einen Abschnitt hat, der nach unten geneigt ist; **dadurch gekennzeichnet, dass** er einen Freisetzungszylinder (47) umfasst, der mit einem Kopplungselement (43) verbunden ist, welches drehgelenkig mit dem Fahrgestell (3) verbunden ist zum Zwecke seiner Oszillation mit Bezug auf den Blockierhaken (41), der von einem Hydraulikkreis (32b) betätigt wird, der von einer Hydraulikpumpe (33b) versorgt wird und mit einem Folgeventil (31b) zur Betätigung des Kopplungselements (43) vor der Betätigung des Hubkolbens (35) des Bettes (2) ausgestattet ist.

6. Der Kippkörper (1b) gemäß Anspruch 5, **dadurch gekennzeichnet, dass** das Kopplungselement (43) drehgelenkig mit dem Fahrgestell (3) verbunden ist, zum Zwecke seiner Oszillation im Kontrast zu einer Rückstellfeder (45), die dazu dient, es in Eingriff mit dem Blockierhaken (41) zu halten.

7. Der Kippkörper (1b) gemäß Anspruch 5, **dadurch gekennzeichnet, dass** er zwischen dem Blockierhaken (41) und dem Kopplungselement (43) einen Positionssensor umfasst, der ein Signalelement antreibt.

8. Der Kippkörper (1b) gemäß Anspruch 5, **dadurch gekennzeichnet, dass** er zwischen dem Kopplungselement (43) und dem Freisetzungszylinder (47) einen Schieber (48) umfasst, der integral mit dem Kopplungselement (43) ist und sich in einer Führung (49) bewegen kann, die im Kolbenkopf des Freisetzungszylinders (47) geformt ist.

## Revendications

1. Corps basculant (1à, 1b), pour des véhicules en général pourvus de moyens de sécurité, comportant un plateau basculant (2) qui est associé à un châssis (3) d'un véhicule par des moyens de pivotement pour le basculement dudit plateau, comportant, en un point qui est espacé desdits moyens de pivotement, des moyens (10a, 10b) pour le blocage amovible dudit basculement, qui peuvent être insérés automatiquement lorsque ledit plateau (2) est abaissé sur ledit châssis (3), lesdits moyens (10a) de blocage amovible du basculement comportant un crochet de blocage (11) qui est associé au châssis (3) du véhicule et peut venir en prise avec un anneau d'accouplement (20) qui est relié audit plateau (2), **caractérisé en ce qu'**il comporte un vérin de déverrouillage (30) qui est relié audit crochet (11) pour son oscillation par rapport audit anneau d'accouplement (20), qui est actionné par un circuit hydraulique (32a) qui est alimenté par une pompe hydraulique (33a) et est pourvu d'une vanne séquentielle (31a) pour l'actionnement dudit crochet de blocage (11) avant l'actionnement du piston de levage (35) dudit plateau (2).

2. Corps basculant (1a) selon la revendication 1, **caractérisé en ce que** ledit anneau d'accouplement (20) pivote sur ledit plateau (2) pour son oscillation en opposition à un ressort de rappel (22), qui est adapté pour le maintenir en prise avec ledit crochet (11).

3. Corps basculant (1a) selon une ou plusieurs des revendications précédentes, **caractérisé en ce que** ledit crochet de blocage (11) a, sur la courbe extérieure (14), une partie qui est inclinée vers le bas.

4. Corps basculant (1a) selon une ou plusieurs des revendications précédentes, **caractérisé en ce qu'**il comporte, entre ledit crochet de blocage (11) et ledit anneau d'accouplement (20), un capteur de position électrique qui entraîne un élément de signalisation.

5. Corps basculant (1a, 1b) pour des véhicules en général pourvus de moyens de sécurité, comportant un plateau basculant (2) qui est associé à un châssis (3) d'un véhicule par des moyens de pivotement pour le basculement dudit plateau, et comportant en outre, en un point qui est espacé desdits moyens de pivotement, des moyens (10a, 10b) pour le blocage amovible dudit basculement, qui peuvent être insérés automatiquement lorsque ledit plateau (2) est abaissé sur ledit châssis (3), lesdits moyens (10b) pour le blocage amovible du basculement comportant un crochet de blocage (41), qui est solidaire dudit plateau (2) et a, sur la courbe extérieure (42), une partie qui est inclinée vers le bas, **caractérisé en ce qu'**il comporte un vérin de déverrouillage (47) qui est relié à un élément d'accouplement (43) qui pivote sur ledit châssis (3) pour son oscillation par rapport audit crochet de blocage (41), qui est actionné par un circuit hydraulique (32b) qui est alimenté par une pompe hydraulique (33b) et est pourvu d'une vanne séquentielle (31b) pour l'actionnement dudit élément d'accouplement (43) avant l'actionnement du piston de levage (35) dudit plateau (2).

6. Corps basculant (1b) selon la revendication 5, **caractérisé en ce que** ledit élément d'accouplement (43) pivote sur ledit châssis (3) pour son oscillation en opposition à un ressort de rappel (45), qui est adapté pour le maintenir en prise avec ledit crochet de blocage (41).

7. Corps basculant (1b) selon la revendication 5, **caractérisé en ce qu'**il comporte, entre ledit crochet de blocage (41) et ledit élément d'accouplement (43), un capteur de position qui entraîne un élément de signalisation.

8. Corps basculant (1b) selon la revendication 5, **caractérisé en ce qu'**il comporte, entre ledit élément d'accouplement (43) et ledit vérin de déverrouillage (47), un coulisseau (48) qui est solidaire dudit élément d'accouplement (43) et peut se déplacer dans un guide (49) qui est formé dans la tête du piston dudit vérin de déverrouillage (47).
